# EUROPEAN PATENT APPLICATION

(11) **EP 4 467 429 A1**
(43) Date of publication of application: **27.11.2024**
(21) Application number: 24163821.2
(22) Date of filing: 15.03.2024
(51) Int. Cl.: B62D 63/06

(54) **TRAILER**

(30) Priority: 17.03.2023 SE 2350299; 31.05.2023 SE 2350671
(71) Applicant: Magnus C. Service AB, 341 91 Ljungby (SE)
(72) Inventor: KARLSSON, Magnus, 341 91 LJUNGBY (SE)
(74) Representative: Industripatent i Växjö AB

(57) **Abstract**

The present disclosure relates to a road trailer (1) for connecting with an automotive truck, and also considers a truck-trailer combination and a truck adapted for connecting with the trailer. The trailer comprises a front hitch coupler (3) for connecting with a mating hitch of the truck, the front hitch coupler (3) being connected to a trailer chassis (5, 7, 9, 11) carried by a wheel axle (13). Further, at least one rear chassis connector (15, 17) is provided configured to connect with a frame under the truck for rigidly connecting the trailer to the truck. This trailer configuration allows the truck to be relieved of load to a greater of lesser extent by forming a bogie-like wheel configuration.

## Description

### Field of the invention

The present disclosure relates to a road trailer for connecting with an automotive truck, the trailer comprising a front hitch coupler for connecting with a mating hitch of the truck, the front hitch coupler being connected to a trailer chassis, carried by a wheel axle.

### Background

Trailers of the initially mentioned kind are in extensive use in road traffic, carrying load of different kinds. While such trailers are very useful, an associated problem is still how to accomplish even more versatile trailers.

### Summary

One object of the present disclosure is therefore to provide an even more versatile trailer. This object is achieved by a trailer as defined in claim 1. More specifically, a trailer of the initially mentioned kind then comprises at least one rear chassis connector configured to connect with a frame under the truck for rigidly connecting the trailer to the truck.

With this configuration, the hitch coupler can be connected to a hitch located under the truck, while the at least one chassis connector connects to a corresponding connector at the chassis of the truck towards the rear thereof. This configures the trailer similarly to a bogie arrangement of the truck, but the trailer can still carry a significant load on its own, which reduces the load that need be carried by the truck itself, thereby improving the stability thereof. At the same time, the area behind the truck may be left more or less free for loading/unloading the truck. This trailer can have different roles in relation to the truck, thereby fulfilling the objective of improved versatility.

Typically, the at least one rear chassis connector may be located on the opposite side of the wheel axle as seen from the front trailer hitch coupler.

The chassis may comprise a first and a second lateral beam and a rear chassis connector may be attached to each of the lateral beams.

First and second support posts may be adapted to connect the chassis of the trailer to a chassis of a truck. This allows the truck to control how much load is transferred to the trailer. The support posts may be attached to a front transversal beam of the trailer chassis.

The trailer may comprise a tailgate lift arrangement for the truck, thereby providing a loading/unloading function without adding weight to the truck itself.

Alternatively, a battery pack may be provided on the trailer adapted to be connected to the truck.

Alternatively, the trailer may comprise a battery pack, an electric motor, configured to be powered by the battery pack, and the wheel axle may be a driving wheel axle driven by the electric motor. This alternative provides e.g. a Diesel truck with an auxiliary, electric motor that may be used in circumstances where the Diesel engine of the truck cannot be used, e.g. due to regulations.

The present disclosure also considers an automotive truck comprising a chassis, a cargo box, and a trailer hitch. The trailer hitch is retracted on the chassis at least 0.8 m from the rear end of the cargo box, and the chassis comprises at least one trailer connector closer to the end of the chassis, such that a trailer can be rigidly connected to the chassis under the cargo box. This adapts a truck for use of the above-defined trailer which is placed under the cargo box.

The chassis may be carried by a rear wheel axle, and an air suspension of the rear wheel axle may be configured to alter the load on a trailer.

The present disclosure also considers a combination of a trailer and an automotive truck as defined above.

### Brief description of the drawings

Figs 1A-C illustrate schematically a road truck according to prior art.
Fig 2 illustrates one example of a truck chassis layout according to prior art.
Fig 3 illustrates the truck chassis layout of fig 2 modified according to one example of the present disclosure.
Fig 4 illustrates schematically a trailer according to one example of the present disclosure.
Fig 5 illustrates the trailer of fig 4 connected to a truck chassis as shown in fig 3.
Fig 6A and 6B illustrates a trailer in greater detail.
Fig 7 shows the trailer of fig 6A connected to a truck.
Fig 8 illustrates a first alternative use of a trailer according to the present disclosure.
Fig 9 illustrates a second alternative use of a trailer according to the present disclosure.

### Detailed description

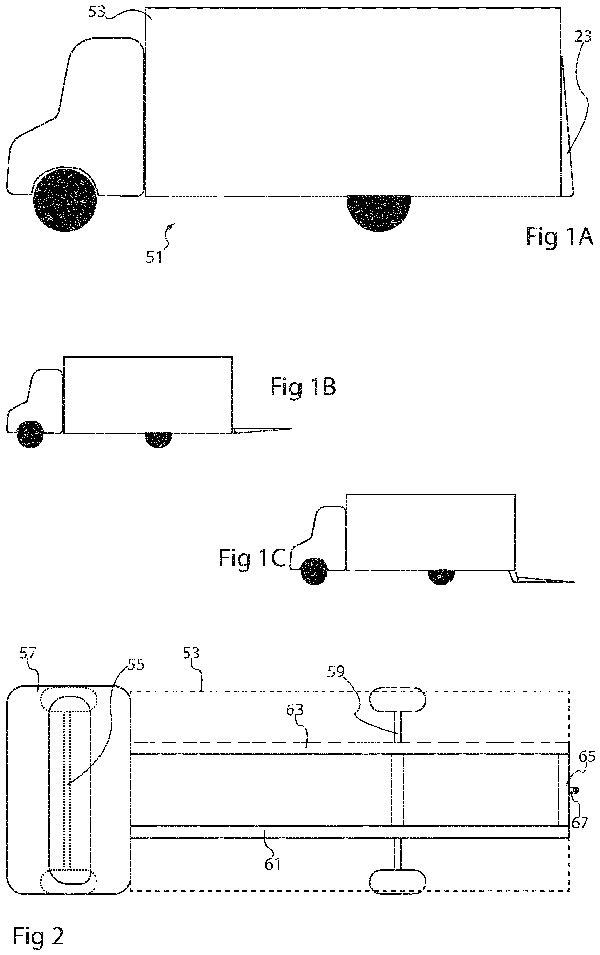

Figs 1A-C illustrate schematically a road truck 51 according to prior art. The road truck is in the form of a box truck with a cargo box 53 built on a chassis cab truck. The road truck 51 may typically be configured to have a total weight less than 3.5 tons and is often used for local distribution. The present disclosure is also applicable to road trucks up to a total weight of 7 tons, where total weight includes cargo.

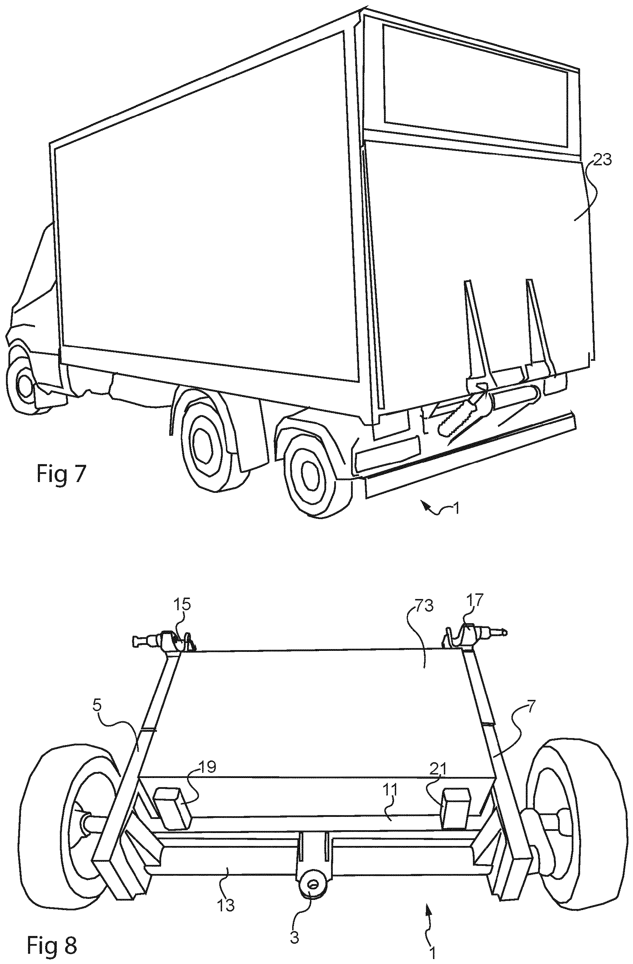

In one configuration that is related to the present disclosure, the truck may comprise tailgate lift 23 (also seen in fig 7) that may assist in loading/unloading the truck. During driving, the tailgate lift functions as a box door as shown in fig 1A (and in fig 7). Fig 1B illustrates the tailgate lift being pivoted outwards thereby forming a platform that can be used for loading/unloading the cargo box. The tailgate lift 23 may also be lowered to street level. Thereby, a single driver with a pallet lift can readily load or unload heavy pallets into or from the truck. This configuration is of course well known per se.

The tailgate lift 23 however adds weight to the truck, and in order to maintain stability during driving and to comply with regulations aiming at preventing accidents by lacking stability, the maximum allowed cargo load must be reduced correspondingly. This reduces the potential efficiency of the truck in use to deliver goods. This problem is one example of a problem that can be eliminated or reduced by using a trailer according to the present disclosure. Other examples will follow.

Fig 2 illustrates one example of a truck chassis layout, according to prior art, where the chassis under the cargo box is illustrated, the location of the cargo box 53 only being outlined in the figure. A front wheel axle 55 is built together with the truck cabin 57 and a rear wheel axle 59 is supported by the chassis extending from the cabin. In the illustrated case, the chassis comprises two parallel beams 61, 63 extending in the travel direction of the truck. A transversal beam 65 may comprise a hitch 67 allowing the truck to be connected to a trailer, if desired. It should be noted that other types of truck chassis exist, which do not involve the parallel beams 61, 63 illustrated in fig 2. The present disclosure is applicable to such a truck chassis as well.

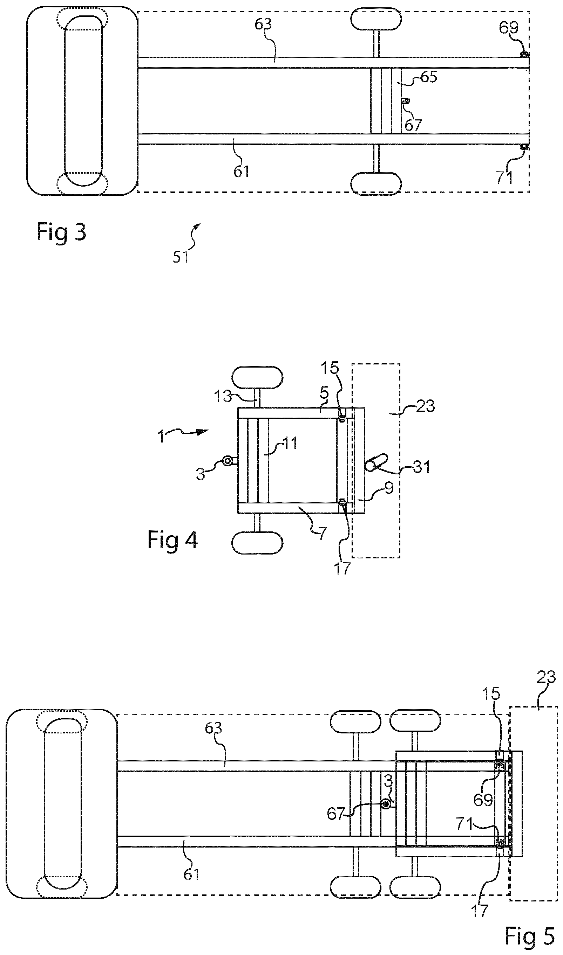

Fig 3 illustrates the truck chassis layout of fig 2 modified according to one example of the present disclosure. In the illustrated case, the transversal beam 65 of fig 2, together with the hitch 67, have been moved forward towards the front of the truck. Further, rear trailer connectors 69, 71 are provided as will be discussed. This allows connecting a trailer as will be described to the truck. It should be noted that the present disclosure considers per se a truck modified in this way.

Fig 4 illustrates schematically a road trailer 1 according to one example of the present disclosure. The trailer 1 is adapted to be connected with an automotive truck, as the one illustrated in fig 3, and comprises a front hitch coupler 3 for connecting with a mating hitch 67 of the truck. The front hitch coupler 3 is connected to a trailer chassis 5, 7, 9, 11 carried by a wheel axle 13. Further, at least one, in the illustrated case two, rear chassis connectors 15, 17 are provided. The chassis connectors 15, 17 are configured to connect with the truck frame on the underside of the latter and by means of the rear trailer connectors 69, 71.

This rigidly connects the trailer 1 to the truck which will be illustrated with reference to fig 5. Thus, the trailer does not pivot sideways from the hitch 67 (cf. fig 5). The trailer may comprise a retractable support wheel 31, for instance a swiveling wheel, close to its rear end, or at least on the opposite side of its mass center as seen from the wheel axle 13, such that the trailer 1 can be moved with little effort when not connected to a truck.

The trailer 1 may carry different loads. In the illustrated case, the trailer carries a tailgate lift 23 for the truck. That is, when connected to the truck, it provides the tailgate lift that functions as a door and a raiseable loading platform at the rear of the truck (cf. fig 7). This relieves the truck of the weight of the tailgate lift, which may be e.g. 250 kg, meaning that the truck becomes more stable and can carry a correspondingly higher load while complying with load regulations relating to stability.

Fig 5 illustrates the trailer of fig 4 connected to a truck chassis as shown in fig 3. Thus, the hitch connector 3 of the trailer 1 is connected to the hitch 67 of the truck, and the trailer's 1 chassis connectors 15, 17 each connect to the respective rear trailer connector 69, 71 of the truck. In this connected state, the trailer 1 becomes fixedly connected to the chassis of the truck, that is, the trailer follows the truck directly and with no lag in directional changes. Visually, the wheels of the trailer form a bogie with the rear wheels of the truck. The trailer can still carry its own load however, although that load can be changed, as will be shown.

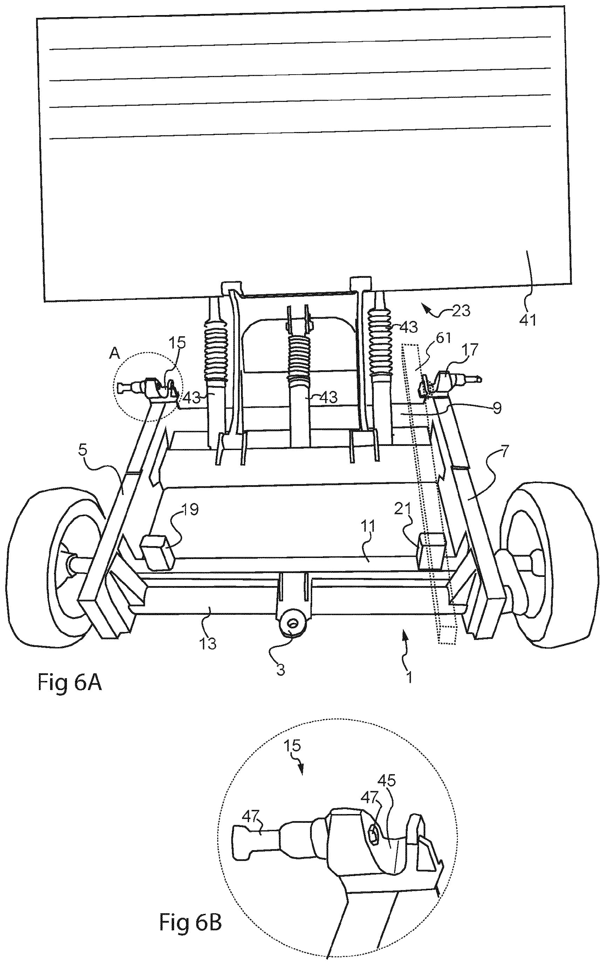

Fig 6A illustrates the trailer 1 in greater detail. The chassis of the trailer 1 comprises a first 5 and a second 7 lateral beam, running in the direction of travel, and a rear 9 and a front 11 transversal beam, interconnecting the lateral beams 5, 7. The chassis further comprises a wheel axle 13 running under the lateral beams and having right and left wheels. The wheel axle 13 may comprise a simple torsion suspension, for instance. The hitch connector 3, which may be a simple ring connector, is attached to the front lateral beam 11. Typically, an automatic hitch/hitch coupler solution is selected. Several such solutions are available and known by the skilled person. It should be noted that the illustrated configuration is one example and can be varied in different ways.

In the illustrated case, a tailgate lift 23 is attached to the rear of the trailer 1, and comprises, in addition to the door/platform 41, several hydraulic cylinders 43 for tilting and lifting the door/platform. Those movements are run by a control box (not shown) connected to the cylinders 43. Tailgate lifts 23 of this kind are well known to the skilled person and in different configurations.

At least one rear chassis connector 15, 17 is provided, configured to connect with a frame under the truck for rigidly connecting the trailer to the truck.

In the illustrated example a rear chassis connector 15, 17 is attached to each of the lateral beams 5, 7. Typically, the rear chassis connectors 15, 17 are located on the opposite side of the wheel axle 13 as seen from the front trailer coupler 3.

The rear chassis connectors 15, 17 may be configured as illustrated in fig 6B showing the portion A of fig 6A enlarged. The rear chassis connector 15 comprises a groove 45 into which a loop or similar, forming part of the mating trailer connector 69, 71 and being attached to the truck chassis, may be placed. To secure the loop or similar therein, a bolt 47 or similar is screwed into an opening in the chassis connector such that it covers the groove, trapping the loop therein. Such connectors are per se well known, and different variations exist, the one above being an example. The trailer connector 69, 71 is generally a metal loop or bar that is rigidly fastened to the truck chassis and capable of fitting in the groove 45.

Returning to fig 6A, the location of one of the truck's longitudinal beams 61 is indicated dotted in the drawing. Thus it is located just inside the lateral beam 7 of the trailer 1 when the trailer connector 71 of the truck connects with the rear chassis connector 17 of the trailer.

The trailer may be provided with support posts 19, 21 located for instance on the front lateral beam 11, as illustrated. Those may abut the truck beam 61, 63, respectively, when the trailer 1 is connected to the truck. This makes it possible to change the load of the trailer 1 by adjusting the air suspension of the trucks rear wheel axle. This lowers or elevates the truck chassis such that it presses more or less on the trailer 1 via the posts 21. In an extreme position, illustrated in fig 7, the chassis has been raised until the trailer wheels are raised from the ground. This may save fuel consumption in case for instance the truck is empty and is capable of carrying the trailer while complying with safety regulations. More generally, the support posts 19, 21 are located in the front part of the trailer, preferably within 0.5 m from the hitch connector 3, in an area close to the wheel axle 13.

Fig 8 illustrates an alternative use of a trailer 1 according to the present disclosure. In this case, instead of carrying a tailgate lift as in fig 6A, the trailer is loaded with a battery pack 73. A trailer 1 of this type is usually allowed to weigh approximately 750 kg including load, which means that a substantial auxiliary battery pack for a truck can be carried, significantly increasing the operating range of an electric truck.

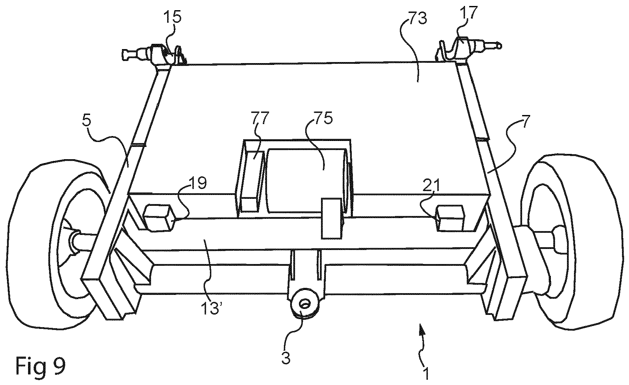

Fig 9 illustrates schematically a second alternative use of a trailer according to the present disclosure. In this example, the trailer of fig 8 is developed further by providing an electric motor 75 and control electronics 77 for that motor 75 connected to the battery pack 73 and being controlled by the driver of the truck. Further, the trailer comprises a driving axle 13', driven by the electric motor. The capacity of the battery pack 73 may be slightly reduced to make room for the motor 75 and the control electronics. With this configuration it is possible to drive the truck electrically when the truck chassis is lowered so as to activate the trailer as discussed above. Then, the truck, typically built as a Diesel truck, can temporarily be electrically driven, for instance in an area where use of internal combustion engines is restricted, or even indoors.

In summary, the present disclosure relates to a road trailer for connecting with an automotive truck, and also considers a truck-trailer combination and a truck adapted for connecting with the trailer. The trailer comprises a front hitch coupler for connecting with a mating hitch of the truck, the front hitch coupler being connected to a trailer chassis carried by a wheel axle. Further, at least one rear chassis connector is provided configured to connect with a frame under the truck for rigidly connecting the trailer to the truck. This trailer configuration allows the truck to be relieved of load to a greater of lesser extent by forming a bogie-like wheel configuration.

The present disclosure is not limited to the above-described examples and may be varied and altered in different ways within the scope of the appended claims.

## Claims

1. Road trailer (1) for connecting with an automotive truck, the trailer comprising a front hitch coupler (3) for connecting with a mating hitch of the truck, the front hitch coupler (3) being connected to a trailer chassis (5, 7, 9, 11) carried by a wheel axle (13), **characterized by** at least one rear chassis connector (15, 17) configured to connect with a frame under the truck for rigidly connecting the trailer to the truck.

2. Road trailer according to claim 1, wherein the at least one rear chassis connector (15, 17) is located on the opposite side of the wheel axle (13) as seen from the front trailer coupler (3).

3. Road trailer according to claim 1 or 2, wherein the chassis comprises a first (5) and a second (7) lateral beam and wherein a rear chassis connector (15, 17) is attached to each of the lateral beams (5, 7).

4. Road trailer according to any of the preceding claims, comprising first and second support posts (19, 21) adapted to connect the chassis of the trailer (1) to a chassis of a truck.

5. Road trailer according to claim 4, wherein the support posts (19, 21) are attached to a front transversal beam (11) of the trailer chassis.

6. Road trailer according to any of the preceding claims, comprising a tailgate lift arrangement (23) for the truck.

7. Road trailer according to any of the preceding claims, comprising a battery pack (73) adapted to be connected to the truck.

8. Road trailer according to any of the preceding claims, comprising a battery pack (73) an electric motor (75) configured to be powered by the battery pack (73), and wherein the wheel axle is a driving wheel axle (13') driven by the electric motor (75).

9. Automotive truck comprising a chassis (61, 63), a cargo box (53), and a trailer hitch (67), **characterized by** the trailer hitch being retracted on the chassis at least 0.8 m from the rear end of the cargo box, and the chassis comprising at least one trailer connector (69, 71) closer to the end of the chassis, such that a trailer can be rigidly connected to the chassis under the cargo box (53).

10. Automotive truck according to claim 9, wherein the chassis is carried by a rear wheel axle (59), and a air suspension of the rear wheel axle is configured to alter the load on a trailer.

11. A combination of a trailer according to any of claims 1-8 and an automotive truck according to claim 9 or 10.
